# EUROPEAN PATENT APPLICATION

(11) **EP 2 320 588 A2**
(43) Date of publication of application: **11.05.2011**
(21) Application number: 10189863.3
(22) Date of filing: 03.11.2010
(51) Int. Cl.: H04L 1/00

(54) **Method of transmitting data**

(30) Priority: 06.11.2009 DE 102009052243
(71) Applicant: Deutsches Zentrum für Luft- und Raumfahrt e.V., 51147 Köln (DE)
(72) Inventor: Boussemart, Vincent, 81241 München (DE); Del Bianco, Alessandro, 82234 Wessling (DE)
(74) Representative: von Kreisler Selting Werner

(57) **Abstract**

The invention is related to a method of transmitting data from a transmitter to a receiver, in particular in a DVB-Scenario. Data is transmitted in consecutive bursts and each burst comprises a plurality of MultiProtocol-Encapsulation (MPE) and Multiprotocol-Encapsulation-Inter-Burst Forward Error Correction (MPE-iFEC) sections. The data part of a burst (K) is not necessarily completely filled and thus can contain a padding, i.e. it is possible that there is no data at the end of the ADST. The burst size of a burst (K) is indicated by the previous burst size field present in the header of each MPE-iFEC section in different other bursts or in the same burst (K).

According to the invention, the burst K is only processed after its size is known by using the information present in different other bursts (K+1, K+2,...) or in the same burst (K).

An independent invention is further related to the use of a burst status queue for storing the status of the bursts.

## Description

The invention is related to a method of transmitting data from a transmitter to a receiver, in particular in a DVB-Scenario.

In the following different mechanisms and optimizations that can be used preferably in Multi-Protocol Encapsulation (MPE) - inter-burst Forward Error Correction (iFEC) Receivers for decoding are presented.

The transmission of data is performed according to "Digital Video Broadcasting (DVB); DVB specification for data broadcasting, ETSI EN 301 192 V1.4.2, April 2008" in bursts: an amount of data is inserted in the physical layer according to a given duration. On the one hand Multi-Protocol Encapsulation - Forward Error Correction was defined in order to add redundancy information within a given burst. The content of the burst is protected and if some losses occur data can be recovered. MPE-FEC is able to recover from fade events which are in the order of hundreds milliseconds. MPE-FEC is used for instance in Digital Video Broadcasting - Terrestrial (DVB-T) as described in "Framing structure, channel coding and modulation for digital terrestrial television, ETSI EN 300 744 V1.6.1, Jan. 2009". On the other hand, when considering a reception using a satellite segment fade events become more critical. Shadowing can occur (element between the satellite and the terminal) and the duration and the frequency of the fade events depend on the terminal position. When considering a mobile terminal fade events are in the order of several seconds. As specified previously MPE-iFEC means MPE - inter-burst FEC, i.e. the redundancy is computed and distributed over several time-slice bursts and this directly increases the interleaver duration. When MPE-FEC is able to recover fade events which are in the order of hundred milliseconds, MPE-iFEC can recover fade events which are in the order of several seconds.

MPE-iFEC is used for receiving data on a mobile terminal while using a satellite transmission. The corresponding standard is the Digital Video Broadcasting - Satellite Handheld (DVB-SH) as described in "Framing Structure, channel coding and modulation for Satellite Services to Handheld devices (SH) below 3 GHz, ETSI EN 302 583 V1.1.1, July 2007" and will be considered from now on in the present application.

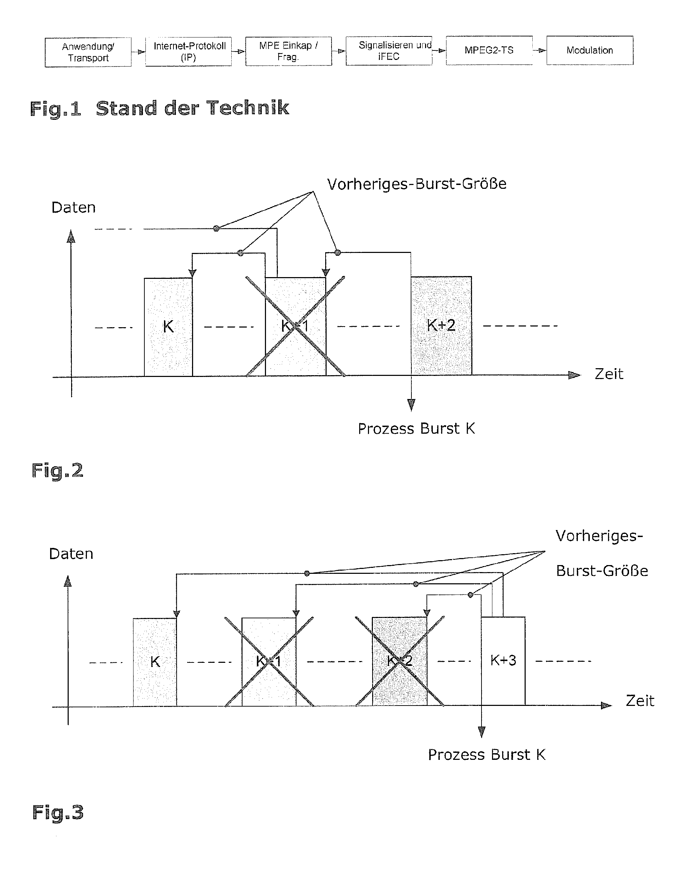

First, the mechanisms and optimizations that can be used in DVB-SH Receivers which are compliant with MPE-iFEC are described. Data is transmitted and is received by the terminals in bursts. The layered approach considered at the transmission side is the one depicted in figure 1.

Data is generated by the application and encapsulated by the transport layer. It can be for instance a video encapsulated over the Real-Time Protocol (RTP) and the User Datagram Protocol (UDP). The packets issued from the application/transport layers are then forwarded to the Internet Protocol (IP) in order to be encapsulated. IP datagrams produced by the IP layer are transmitted to the Multi-Protocol Encapsulator (MPE) where a header (12 bytes) and a trailer (4 bytes, CRC check) are added. The next layer is responsible of the signaling and of the iFEC part. Actually according to some mechanisms which are described in "Guidelines for Implementation for Satellite Services to Handheld devices (SH) below 3GHz, ETSI TS 102 584 V1.1.1, Dec. 2008" data (MPE sections) is collected and redundancy is produced. The redundant data is encapsulated into MPE-iFEC sections and signaling is added into the header of each MPE-iFEC section so that the Receiver can handle them. The MPE-iFEC sections are finally distributed over different bursts. A burst is composed of the MPE sections containing the IP packets belonging to this burst and of the MPE-iFEC sections which where built taking into account data from different bursts (mechanisms described in "MPE-IFEC, Draft TS 102 772 V1.1.1, DVB BlueBook A131, Nov. 2008"). Before being modulated and transmitted the sections are finally encapsulated into MPEG - Transport Stream (TS) packets which have a 5 or 4 bytes header and respectively 183 or 184 bytes payload.

The purpose of the Receiver is to reorganize correctly all sections (MPE and MPE-iFEC), to decode data and redundancy and to recover the IP datagrams. As specified previously during the transmission fade events can occur meaning that some parts of the burst, and / or one or several bursts, can be lost.

The data part of a burst that is built with the IP datagrams is not necessarily completely filled. This is mainly due to the time limitation related to the burst construction. For this reason the beginning of the Application data subtable (ADST) is filled with IP datagrams but not necessarily the end. The capacity of the decoder to successfully retrieve original data depends on the number of columns that are with "errors" and reciprocally that are "error free".

It is an object of the present invention to provide for a method of transmitting data from a transmitter to a receiver, whereby the transmission reliability is improved.

According to the invention, this object is achieved by the features of claim 1.

In a method of transmitting data from a transmitter to a receiver, in particular in a DVB-Scenario, data is transmitted is consecutive bursts and each burst comprises a plurality of MPE and/or MPE-iFEC sections. As described the data part of a burst is not necessarily completely filled. Therefore, a padding containing no data is present in the Application data subtable (ADST). The burst size of a burst is indicated by the previous burst size field present in the header of each MPE-iFEC section present in different other bursts or even in the same burst. Thus the information can be present in subsequent or previous bursts or even in the same burst.

According to the invention, a burst is only processed as soon as its size is known by using the information present in different other bursts or present in the same burst. The burst size of a burst does not necessarily need to be known from the subsequent burst following immediately after the said burst or from the directly preceding burst. For example, if the burst size information cannot be retrieved from the first burst that should contain this information (the directly preceding or subsequent burst) the burst size can be retrieved by using the information present in other bursts, e.g. in later bursts carrying this information.

In other words the information concerning the burst size can come unexpected.

If the burst size of a burst is known, the size of the padding within the burst, namely the data-free area, is known. Therefore, it is possible to recover the padding information so that the receiver can mark columns originally labeled as containing errors as error-free, since these columns do not contain any data. Therefore, knowing the burst size and the size of the padding helps the decoder to consider more columns as being error-free, so that these columns do not have to be recovered by using redundant data. Therefore, the capacity of the decoder to successfully retrieve original data is improved so that the transmission reliability is improved.

When the Receiver fills back the ADST using the payload of the MPE sections it can check the column status of the ADST. The column is either marked as "error free" or with "errors". By default all columns are preferably marked as with "errors" and the flag is removed once the number of bytes written in a column corresponds to the size of this column (that is T, the number of rows). Columns that are "error free" will be taken into account by the decoder in order to recover data losses (columns with "errors").

According to the state of the art, a burst is processed as soon as a new burst is detected. Depending on the previous burst size information given by different other bursts (if the sections received are iFEC sections) the size of the burst stored in memory will be retrieved or not. Therefore, according to the state of the art, a burst will frequently be processed without knowing its original size.

According to the present invention, a burst is not processed as long as its burst size cannot be retrieved in one or a plurality of subsequent bursts. Of course, it is possible to start processing a burst without knowing its burst size, if the burst size cannot be retrieved using e.g. the 7, 10, 15, 20 or 25 subsequent bursts following the burst.

The burst can be stored in a memory on the receiver side until its burst size is retrieved and the burst is processed. It is preferred that by default, all columns of the application data subtable are marked as containing errors, and this flag is removed once the number of bytes written in a column corresponds to the size of this column, that is, to the number of rows.

Thus, according to the invention, the recovery of the burst size information is used for recovering missing columns in a burst by marking columns which are present in the padding between two bursts, namely in the data-free area, as error-free, so that other missing columns can be recovered more efficiently using the transmitted redundant data.

More features of this first independent invention will be described with reference to the figures of the present application.

An independent invention is also related to a method of transmitting data from a transmitter to a receiver having the same features as described in connection with the first invention. Instead of waiting with the processing of a burst until its size is known by using the information present in other bursts, the second invention is related to the use of a burst status queue. Similar to the first invention, the object of the second invention is also to improve the transmission reliability and the ability of the method to recover data in spite of longer fade events.

According to the second invention, a burst status queue is used into which the status of the bursts is stored. The burst status queue contains at least one of the following information: Burst number, burst size, number of sections of each type (MPE-iFEC, other sections), last address, and/or last section index. Each time a section is processed by the receiver, it is checked if it belongs to a new burst or not. Each time a new burst is detected, a new entry is created in the burst status queue. It is preferred that the burst status queue is operated in the First in-First out (FIFO) mode. This queue permits to have an overview of the bursts received and also to manage them more efficiently.

An entry in the burst status queue can have a burst number, which is marked as known, that is a number between 0 and kMAX, or marked as unknown. Further, an entry in the burst status queue can have the burst size marked as known when the burst size information is recovered, or marked as unknown or unrecoverable.

It is preferred that the last address and the last section number are updated respectively by the last MPE-section and the last MPE-iFEC section received for the burst corresponding to that entry of the burst status queue, whereby the last address and/or the last section number are used in particular as additional mechanisms to detect the presence of a new burst.

In a preferred embodiment, if a section received by the receiver is an iFEC section, the value of the burst number can be used to update the last burst entry in the burst status queue. There are two possibilities. The first one is to create a new entry, when the last entry in the burst status queue contains a burst number which is known and has a different value from the current one. The second is not to create a new entry when the last entry in the burst status queue contains a burst number which is unknown. In both cases, the burst number in the last entry of the burst status queue is updated with the current burst number.

It is particularly preferred that all MPE-sections present in the buffer which contains all sections being processed are associated to a given burst number using the time stamp indication (as described in connection with the time-slicing method). In a preferred embodiment based on the next burst start information which is present in each section, each MPE section which does not belong to a burst, namely having an unknown burst number, is analyzed in order to determine its burst number.

It is preferred to check the burst status queue for duplicate entries, in that entries having the same burst number are deleted, the oldest entry is taken as a reference, the number of sections are gathered, whereby the last address and the last sections number considered are the ones given by the most recent duplicate entry, so that the older duplicate entries are discarded and only the most recent one is kept.

It is possible to check old entries in the burst status queue using at least one of the following method steps:
- Removing the oldest entry if it has an unknown burst number, given that the burst status queue contains at least two entries,
- if the burst number of the oldest entry is known and the burst size of this entry is unknown, checking whether the burst size can be retrieved or is unrecoverable, by using the burst number of the most recent entry,
- verifying that the last burst processed is not present in the burst status queue anymore.

It is particularly preferred to compare the last burst processed with the oldest entry of the burst status queue, namely the lowest entry in this queue in order to detect burst losses. Hereby, if the burst number of the oldest entry of the burst status queue differs by more than one value from the burst number of the last burst processed, missing bursts are inserted into the burst status queue, whereby the whole burst status queue is reorganized.

In another preferred embodiment, the first entry (namely the oldest entry) of the burst status queue is taken into account and if both the burst number and burst size are not unknown, all sections belonging to that burst are mapped in order to be decoded, the corresponding entry is removed from the burst status queue and all sections present in the buffer that are older than the first section mapped are deleted, whereby the sections mapped are now ready to be decoded.

The method steps described for creating or processing entries in the burst status queue can be performed individually or in combination with each other in order to improve the transmission reliability.

A third independent invention is also related to a method of transmitting data with the same features as the first invention. Instead of waiting with the processing of a burst until its size is known by using the information present in the subsequent bursts, the inventive feature of the third invention is the use of one or a plurality of method steps for detecting the presence of a new burst.

For this purpose the transmitted sections comprise a time slicing indicator indicating the remaining time (Δt) until the start of the next burst and/or an address corresponding to the MPE-section payload in the application data subtable (ADST) and/or a section number allowing the receiver to determine the position of the MPE-iFEC section payload in the Interburst-Forward-Error-Correction data table (iFDT). The presence of a new burst is detected by one or a plurality of the following method steps: First, the current value of the remaining time can be compared with the previous value of the remaining time, whereby, if the current value is bigger than the previous value, a new burst is detected. Second, the current address in an MPE-section can be compared with the previous address, whereby, if the current address is smaller than the previous address, a new burst is detected. As a third method step, the current section number in an MPE-iFEC section can be compared with the previous section number, whereby, if the current section number is smaller than the previous section number, a new burst is detected.

The proposed method steps are based on the assumption that data received over a satellite transmission has the same order as the transmitted one.

Thus the proposed method allows to gather sections belonging to the same burst and also to detect new bursts. It has to be considered that due to some limitations on the MPE-header format, the burst identifier (that is, the burst number) is carried only by the MPE-iFEC sections.

The technical background of the time slicing method will be described later in the application with reference to figures 9-11.

The present inventions are now described in relation with the following figures:
- Figure 1: shows the layered approach of the MPE-iFEC transmission,
- Figure 2: shows a situation related to the first invention, where the padding information is unknown for processing a burst,
- Figure 3: shows a situation related to the first invention where several burst losses occur before processing a burst,
- Figure 4: shows a burst status queue according to the second invention,
- Figures 5 to 8: show how entries in the burst status queue are created and processed according to the second invention,
- Figure 9: shows the encapsulation of IP datagrams over MPE and MPEG-TS,
- Figure 10: shows a burst transmission at regular intervals,
- Figure 11: shows a burst transmission using the time-slicing method,
- Figure 12: shows the number of erroneous columns in a data transmission method when all padding recovery mechanisms are switched off,
- Figure 13: shows the number of erroneous columns when the first padding recovery mechanism according to the present invention is enabled and
- Figure 14: shows the number of erroneous columns with all padding recovery mechanisms according to the invention being enabled.

Figure 1 has been described in relation with the state of the art in the introduction of the present application.
Figure 2 gives an example on how the padding information can be unknown for processing a burst. In the example the parameter D is equal to zero meaning that the first iFEC section received for a new burst carries the previous burst size information of the burst to be processed. Here the first iFEC section of burst K+1 gives the size of burst K, the second iFEC section of burst K-1 and so on. Since the burst K+1 was completely lost, the size of the burst K is still unknown when receiving the first iFEC section of burst K+2. The iFEC section triggers the processing of the burst K but since the burst size carried refers to the burst K+1 the size of the burst K is discarded. The purpose of the padding recovery mechanism is to keep burst K in memory until the size is retrieved. Here as soon as the second iFEC section of burst K+2 is processed the burst size of burst K is known and thus burst K can be processed more efficiently. If the burst size cannot be retrieved (many bursts lost in the example) then it is processed anyway. Such a mechanism requires a higher amount of memory at the receiver side.

The receiver can also integrate another mechanism that checks for missing bursts and that recovers the padding size of those missing bursts using the previous burst size information. Since the redundancy is computed considering data from different bursts (columns of the ADST are mapped in different ADTs) the recovery of the padding information for missing bursts may help in recovering missing columns. This functionality increases also the overall performance of the receiver.

In the example depicted in figure 3 two bursts are lost after burst K: burst K+1 and K+2. The arrival of the next burst will trigger the process of the burst K (the mechanisms described in the present application can be used to recover the size of burst K). The mechanism described here recovers the missing bursts, i.e. the burst K+1 and K+2 even if no sections were received for each of them. Using the previous burst size information carried by the iFEC sections of burst K+3 the receiver can recover the padding size of burst K, K+1 and K+2 before processing them. Since the padding columns are marked as reliable the number of columns marked as "error free" is increased and the probability of error recovery also.

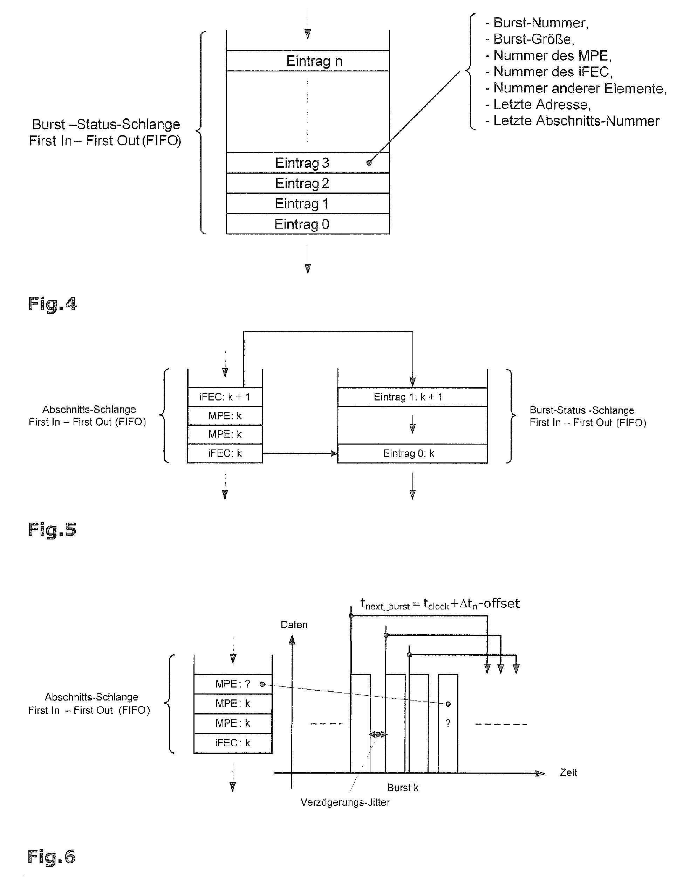

An example of the burst status queue according to the second invention is shown in figure 4.

The "Burst Status" is a kind of queue (first in - first out, FIFO) into which the status of the bursts is stored. Each time a new burst is detected a new entry is pushed into the burst status queue. An entry can contain several useful information such as the burst number, the burst size (data part), the number of sections of each type (MPE, iFEC, others), the last address and the last section index. This type of queue permits to have an overview of the bursts received but also to manage them more efficiently.

As described in the third invention of the present application a new burst can be detected using the next burst start indicator, the burst number, the delta-t information, the address and/or the section number. In some cases when a new burst is detected its number is known, in some cases not. For this reason an entry in the burst status queue can have a burst number marked as "known" (that is a number comprised between 0 and kMax or "unknown".

The burst size is indicated by the MPE-iFEC sections through the previous burst size indicator. It indicates the amount of data present in a previous burst that is the number of bytes occupied by the payload of all MPE sections belonging to a given burst. The index of the previous burst is obtained using the burst number of the iFEC section, its section number and some other parameters. Since the data part of a burst is not necessarily filled completely the burst size information is relevant. Actually the burst size information can be used to derive the size of the padding within a burst. As before the burst size can be "known" (previous burst size information obtained from next bursts), "unknown" but also "unrecoverable".

The number of sections of each type can be used to get some statistics about the burst but is not relevant for the mechanisms proposed here.

The last address and the last section number are updated respectively by the last MPE section and the last MPE-iFEC section received for the burst corresponding to that entry of the burst status (i.e. that belong to the corresponding burst). They can be used as additional mechanisms to detect the presence of a new burst.

Each time a section is processed by the receiver it is checked, using one or a plurality the mechanisms described in the present application, if it belongs to a new burst or not. If the section reveals the presence of a new burst then a new entry is added into the burst status queue.

The analysis of the section header is performed and the values of the last burst status entry (FIFO) are updated accordingly. If the section received is an iFEC section the value of the burst number can be used to update the last burst entry. There are two possibilities:
- The last entry in the burst status queue contains a burst number which is "known" and which has a different value of the current one: a new entry is added as shown in figure 5.
   Or
- The last entry in the burst status queue contains a burst number which is "unknown": no change is performed.

In both cases the burst number of the last entry present in the burst status queue is updated with the current burst number.

Once the previous operations are performed the sections present in the buffer (the buffer contains all sections being processed) are checked and are associated to a given burst number (MPE sections only) using the timestamp indication. Actually all sections are labeled with the timestamp indicating the time at which the section was processed. Based on the next burst start information each MPE section which does not belong to a burst (burst number "unknown") is analyzed in order to determine its burst number as shown in figure 6.

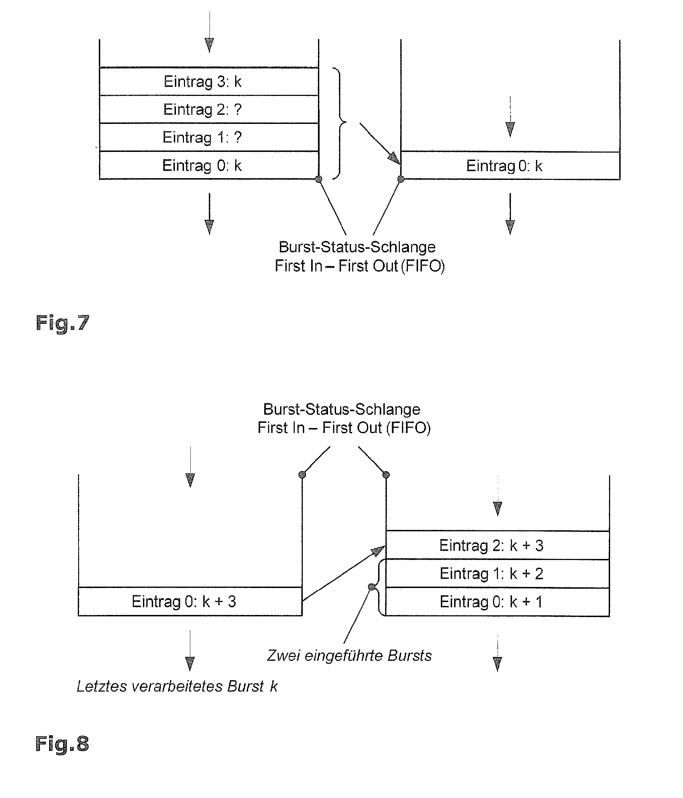

The next step of the burst status mechanism comprises checking duplicate entries in the burst status queue. Actually if new bursts are not perfectly detected the burst status queue can contain several entries having the same burst number. The checking comprises looking for duplicate entries, taking as reference the first entry (i.e. the oldest one) and in gathering all values (number of sections). The last address and the last section number considered are the ones given by the most recent duplicate entry. For this reason the oldest duplicate entries are discarded and only the most recent one is kept as shown in figure 7.

The next operation that can be performed aims at checking old entries in the burst status queue. First if the oldest entry, considering that the burst status contains at least two entries, has an "unknown" burst number then it has to be removed. Otherwise (if the burst number is "known") if the burst size is "unknown" it has to be checked, using the burst number of the most recent entry, whether the burst size can be retrieved or if it is "unrecoverable". Finally the last old entry check comprises verifying if the last burst processed (i.e. decoded) is not present in the burst status queue anymore.

The last operation that can be realized on the burst status queue checks the final entries in order to determine if a burst can be processed (i.e. decoded) or not. It first compares the last burst processed with the one present in the oldest entry of the burst status in order to detect burst losses. In such a case missing bursts are automatically inserted into the burst status, reorganizing the whole burst status queue (FIFO, Figure 8). Next it takes into account the first entry of the burst status queue and if both burst number and burst size are not "unknown" then all sections belonging to that burst are mapped in order to be decoded, the corresponding entry is removed from the burst status and all sections present in the buffer that are older than the first section mapped (timestamp) are deleted. The sections mapped are now ready to be decoded.

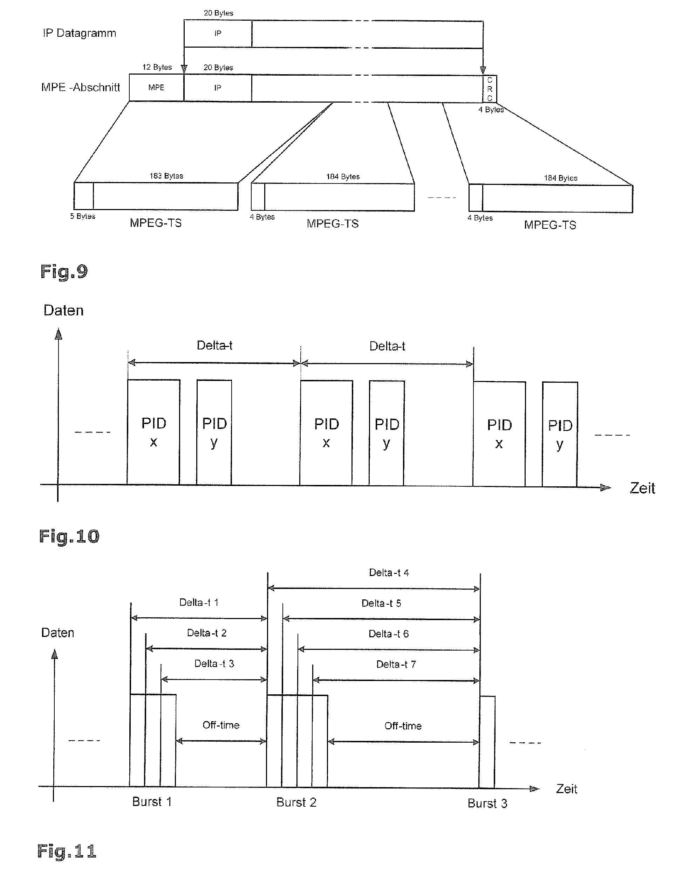

The technical background related to the third invention (time slicing method) will be described based on figures 9-11.

The time-slicing method was introduced in the Digital Video Broadcasting - Handheld (DVB-H) standard as described in "Transmission system for handheld terminals, ETSI EN 302 304 V1.1.1, Nov. 2004". Like in DVB-SH data (IP datagrams for instance) is transmitted after having being encapsulated into MPE sections (12 bytes header / 4 bytes CRC). MPE-FEC and MPE-iFEC sections can be used to add redundancy and thus to recover from errors in case of bad channel conditions. MPE sections are finally encapsulated in MPEG Transport Stream (188 bytes / 4 or 5 bytes header, Figure 9).

The MPEG-TS packets are sent together and have a specific packet identifier (PID). The PID identifies the elementary stream which can be an audio / video stream (TV channel broadcasted for instance) or data. The elementary stream (ES) is thus the service requested by the terminal, it can be a particular channel. Usually data is transmitted in a burst in a regular way and each burst can contain several MPE sections (Figure 10).

The functionality named "Time Slicing" allows bursts not to be sent at regular interval but in a more modular way as described in "Transmission system for handheld terminals, ETSI EN 302 304 V1.1.1, Nov. 2004". It permits to indicate at the beginning of a burst when the next burst should arrive. The information is included into each MPE section (delta-t information in all MPE and MPE-iFEC sections) since some of them can be lost (bad channel conditions). The time indicated is not absolute but relative so that there is no concern about synchronizing the transmitter and the receiver (Figure 11).

The first challenge for the Receiver is to identify to which burst (i.e. the burst number) a MPE section belongs to knowing that the burst number is not indicated. The mechanism described by MPE-IFEC, Draft TS 102 772 V1.1.1, DVB BlueBook A131, Nov. 2008 can be implemented and will be able to recover the burst number in the ideal case.

There are several ways of detecting a new burst, the first one being the use of the time-slicing indicator when receiving an MPE section and the burst number when receiving an MPE-iFEC section as specified in "MPE-IFEC, Draft TS 102 772 V1.1.1, DVB BlueBook A131, Nov. 2008". Other mechanisms can be considered.

As specified previously the time-slicing method aims at informing the Receiver about the start of the next burst. To do so a value (delta-t) is inserted into each MPE and MPE-iFEC section and indicates the remaining time until the first byte of the next burst should be received. The delta-t thus decreases over the time and the values indicated by subsequent sections within a burst can either be the same or smaller.

The mechanism proposed here to detect a new burst is based on this behavior and also on the fact that data received over satellite has the same order as the transmitted one (this is not necessarily the case for terrestrial networks). The principle comprises comparing the previous value of delta-t with the current one and determining if a new burst has arrived or not. This mechanism can be considered additionally the previous ones in order to add safety margins into the burst detection.
- If:
   Δt current > Δt previous
   then a new burst is detected,
- Else other mechanisms have to be taken into account.

MPE sections carry into their headers information about the address. The address corresponds to the position of the MPE section payload (more particularly the first byte) into the ADST as described in "MPE-IFEC, Draft TS 102 772 V1.1.1, DVB BlueBook A131, Nov. 2008". It permits to determine the column and the row at which the payload should be placed. According to the mechanisms used for the construction of the burst the MPE sections of a burst are transmitted one after the others meaning that the address increases between subsequent MPE sections within a burst (the satellite segment preserves the transmission order).

The mechanism proposed here comprises analyzing the current address and comparing it with the previous address received. If the current address is smaller than the previous one then a new burst was received. As previously this is an additional mechanism used to introduce safety margins in the burst detection.
- If:
   *address_{current} < addressₚᵣₑᵥᵢₒᵤₛ*
   then a new burst is detected,
- Else other mechanisms have to be taken into account.

MPE-iFEC sections carry into their headers information about the section number. The section number allows the Receiver to determine the position of the MPE-iFEC section payload into the iFDTs. It is used to compute, together with the burst number, the index and the column of the iFDT in which the payload has to be placed as described in "MPE-IFEC, Draft TS 102 772 V1.1.1, DVB BlueBook A131, Nov. 2008". According to the mechanisms used for the construction of the burst the section number increases from one iFEC section to the next one within the same burst. Moreover the satellite segment does not change the order of the transmission.

The mechanism proposed here comprises retrieving the current section number and comparing it with the previous section number received. If the current section number is smaller than the previous one then a new burst was received. As previously this is an additional mechanism used to introduce safety margins in the burst detection.
- If:
   *section_number_{current} < section_numberₚᵣₑᵥᵢₒᵤₛ*
   then a new burst is detected,
- Else other mechanisms have to be taken into account.

Simulations were performed with three different Receiver configurations: the first one with all padding recovery mechanisms switched off, the second one with the first padding recovery mechanism (as described in relation to figure 2) and the third one with all padding recovery mechanisms enabled (both mechanisms as described in relation with figures 2 and 3). The following parameters were used:
- Encoder / Decoder: Reed-Solomon (255,191)
- IFEC Encoding period "EP" = 1
- IFEC Data Interleaving "B" = 17
- IFEC Spread "S" = 9
- Data delay at sender "D" = 0
- Number of data structure "M" = B+S = 26
- Maximum number of data columns per ADST "C" = 191
- Number of rows in ADST, ADT and iFDT "T" = 768

The data transmitted is the same for the three configurations; nine bursts were completely deleted before reception (bursts 20 to 28). The number of erroneous columns was logged in the Receiver:
- ADST+iFDST (input): this corresponds to the burst received (data part placed in one ADST, redundancy part placed in one so-called "iFDST") and analyzed by the Receiver, the content of the ADST+iFDST will be distributed to several ADTs/iFDTs.
- ADT+iFDT (input): the matrix present at the input of the Decoder, each column corresponds to columns issued from different ADSTs and iFDTs.
- ADT+iFDT (output): the matrix present at the output of the Decoder (after the decoding process).
- ADST (output): the content of the ADST ready to be used (original data).

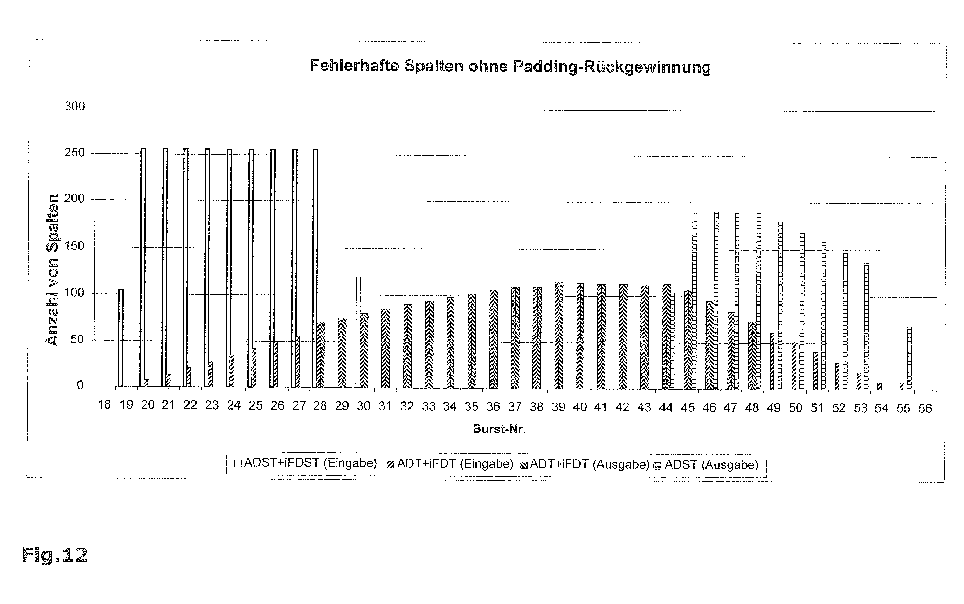

Figure 12 shows the number of erroneous columns when all padding recovery mechanisms are switched off. One can see the errors in the ADST+iFDST of burst 19 which are related to the unknown burst size. The size of burst 19 was not retrieved since the next 9 bursts were lost. Another burst size is lost for burst number 30. All columns were lost for bursts 20 to 28 (255 columns) since the corresponding bursts were not received. The number of columns with errors increased in the ADTs and iFDTs (distribution of the ADST columns into several ADTs/iFDTs) and starting from burst 28 the Decoder cannot recover all errors (the number of columns with errors at the output of the Decoder increases). Finally the impact of the errors on the output of the Receiver can be seen starting from burst 44: the errors present in the ADST+iFDST at the input can be observed after (M - 1) bursts. As a summary the 11 ADST+iFDST with errors at the input of the Receiver cannot be decoded completely and errors still appear in 11 ADST (bursts 44-53 and 55) at the output of the Receiver.

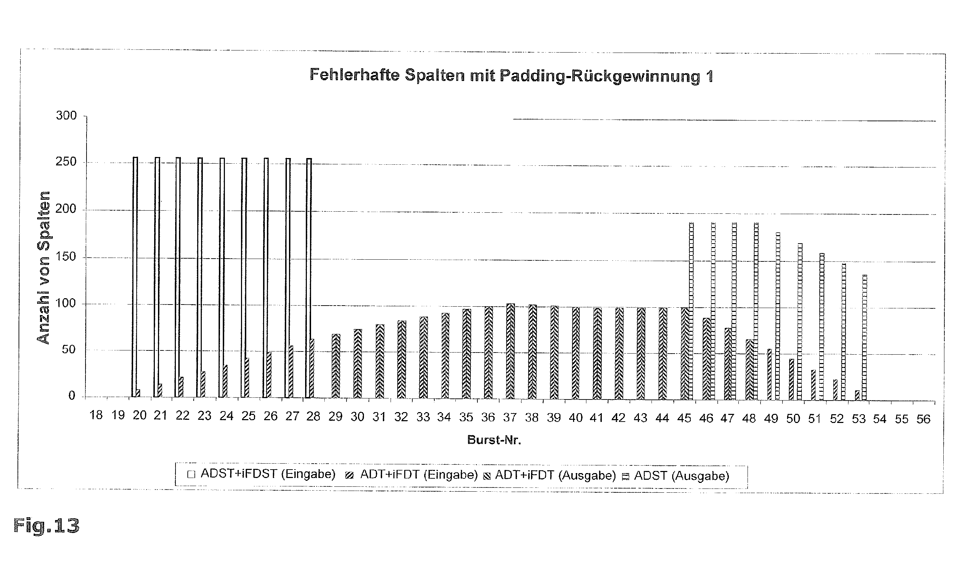

Figure 13 corresponds to the configuration of the Receiver in which the first padding recovery mechanism is switched on. One can see that the two burst sizes missing with the previous configuration (Figure 12) are no more present. Actually the Receiver waited for retrieving the size of the bursts 19 and 30 before processing them. The impact can be seen on the number of erroneous columns since the padding columns are considered as reliable. For instance the ADT+iFDT while processing the burst 28 was recovered completely. Instead of having 11 ADST containing errors at the output of the Receiver now 9 of them still have errors.

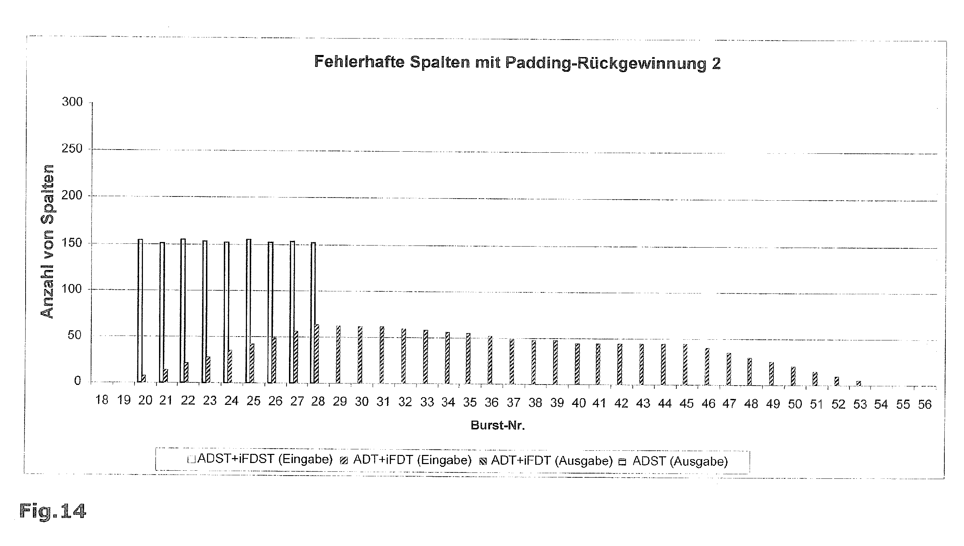

Figure 14 is related to the configuration of the Receiver in which all padding recovery mechanisms were switched on. The Receiver both detects lost bursts but also waits for the size information before processing a burst. One can see that the number of columns with errors in the ADST+iFDST at the input is reduced since the bursts are detected as lost, are recovered by the Receiver and the padding size is retrieved based on the size of these bursts (bursts 20 to 28). The Decoder here recovers all errors present in the ADT+iFDT and there is no more error at the output of the Receiver. Since the distance between the first byte of each burst is about 1.2s in this example the fade event occurred during about 11s meaning that the Receiver using such mechanisms can support at least 11s fade events without having errors at the output. Simulations were realized without padding recovery by deleting different numbers of consecutive bursts and errors disappeared from the output of the Receiver when this number is below 5. Without padding recovery mechanisms the maximum fade event duration guarantying no error at the output of the Receiver is thus about 5s. The performance of the padding recovery mechanisms depends of course on the amount of padding present in each burst. In this example one can see that the padding represents about 100 columns.

The features of all methods described in the present invention can be combined arbitrarily into a single inventive method in order to improve the transmission reliability. Further all these features can be combined arbitrarily with all features of the application "Method of transmitting data" filed on the same date by the same applicant.

In particular a method can comprise the features of claim 1 and in addition the features of claim 2.

## Claims

1. Method of transmitting data from a transmitter to a receiver, in particular in a DVB-scenario,
whereby data is transmitted in consecutive bursts and each burst comprises a plurality of Multi Protocol-Encapsulation (MPE) and Multi Protocol-Encapsulation-Inter-Burst Forward Error Correction (MPE-iFEC) sections,
whereby, the data part of a burst (K) is not necessarily completely filled and thus can contain a padding, namely a data free area at the end of the ADST and
whereby the burst size of a burst (K) is indicated by the previous burst size field present in the header of each MPE-iFEC section in different other bursts (K+1, K+2,...) or in the same burst (K)
**characterized in that**
a burst (K) is only processed after its size is known by using the information present in different other bursts (K+1, K+2, ...) or in the same burst.

2. Method of transmitting data from a transmitter to a receiver, in particular in a DVB-scenario,
whereby data is transmitted in consecutive bursts and each burst comprises a plurality of Multi Protocol-Encapsulation (MPE) and Multi Protocol-Encapsulation-Inter-Burst Forward Error Correction (MPE-iFEC) sections,
whereby, the data part of a burst (K) is not necessarily completely filled and thus can contain a padding, namely a data free area at the end of the ADST and
whereby the burst size of a burst (K) is indicated by the previous burst size field present in the header of each MPE-iFEC section in different other bursts (K+1, K+2, ...) or in the same burst (K)
**characterized in that**
a burst status queue is used, into which the status of the bursts (K, K+1, K+2, ...) is stored, containing at least one of the following information:
Burst number, burst size, number of sections of each type, last address and/ or last section index,
whereby each time a section is processed by the receiver, it is checked if it belongs to a new burst or not and
each time a new burst is detected, a new entry is created in the burst status queue.

3. Method according to claim 1 or 2 **characterized in that** a burst (K) is not processed as long as its burst size cannot be retrieved in a different other burst (K+1, K+2,...) or in the same burst.

4. Method according to anyone of claims 1 to 3, **characterized in that** a burst (K) is stored in a memory on the receiver side until its burst size is retrieved and the burst (K) is processed.

5. Method according to anyone of claims 1 to 4, **characterized in that** a burst (K) is processed without knowing its burst size, if the burst size cannot be retrieved using the 7, 10, 15, 20 or 25 subsequent bursts (K+1, K+2, ...) following the burst (K).

6. Method according to anyone of claims 1 to 5 **characterized in that** by default all columns of the Application Data Subtable (ADST) are marked as containing errors and this flag is removed once the number of bytes written in a column corresponds to the size of this column.

7. Method according to anyone of claims 1 to 6, **characterized in that** the recovery of the burst size information is used for recovering missing columns in a burst by marking padding columns, namely columns in a data-free area, as error-free, so that other missing columns can be recovered more efficiently using the transmitted redundant data.

8. Method according to claim 1 or 7, **characterized in that** the burst status queue is operated in the First In-First Out (FIFO) mode, whereby in particular an entry in the burst status queue can have a burst number marked as known, that is, a number between 0 and KMax, or marked as unknown.

9. Method according to anyone of claims 1 or 7 to 8, **characterized in that** an entry in the burst status queue can have the burst size marked as known when the burst size information is obtained from different bursts containing this information or from the same burst, or marked as unknown or unrecoverable, if the burst size cannot be recovered by using a predefined number of bursts.

10. Method according to anyone of claims 1 or 7 to 9, **characterized in that** the last address and the last section number are updated respectively by the last MPE section and the last MPE-iFEC section received for the burst corresponding to that entry of the burst status queue, whereby the last address and/or the last section number are used in particular as additional mechanisms to detect the presence of a new burst.

11. Method according to anyone of claims 1 or 7 to 10, **characterized in that** if a section received by the receiver is an iFEC section, the value of the burst number can be used to update the last burst entry in the burst status queue,
by creating a new entry, when the last entry in the burst status queue contains a burst number which is known and has a different value from the current one
or by not creating a new entry, when the last entry in the burst status queue contains a burst number which is unknown,
whereby in both cases the burst number of the last entry in the burst status queue is updated with the current burst number.

12. Method according to anyone of claims 1 or 7 to 11, **characterized in that** all MPE-sections present in the buffer, which contains all sections being processed, are associated to a given burst number using the timestamp indication, whereby in particular each MPE-section which does not belong to a burst, namely having an unknown burst number, is analyzed in order to determine its burst number based on the next burst start information, which is present in each section.

13. Method according to anyone of claims 1 or 7 to 12, **characterized in that** the burst status queue is checked for duplicate entries, **in that** entries having the same burst number are deleted, the oldest entry is taken as a reference, the number of sections are gathered, whereby the last address and the last section number considered are the ones given by the most recent duplicate entry, so that the older duplicate entries are discarded and only the most recent one is kept, whereby in particular old entries in the burst status queue are checked, **in that** at least one of the following method steps is performed:
- Removing the oldest entry if it has an unknown burst number, given that the burst status queue contains at least two entries,
- If the burst number of the oldest entry is known and the burst size of this entry is unknown, checking whether the burst size can be retrieved or is unrecoverable, by using the burst number of the most recent entry,
- Verifying that the last burst processed is not present in the burst status queue anymore.

14. Method according to anyone of claims 1 or 7 to 13, **characterized in that** the last burst processed is compared with the oldest entry of the burst status queue in order to detect burst losses, whereby, if the burst number of the oldest entry of the burst status queue differs by more than one value from the burst number of the last burst processed, missing bursts are inserted into the burst status queue, whereby the whole burst status queue is reorganized.

15. Method according to anyone of claims 1 or 7 to 14, **characterized in that** the first entry of the burst status queue is taken into account and if both burst number and burst size are known, all sections belonging to that burst are mapped in order to be decoded, the corresponding entry is removed from the burst status queue and all sections present in the buffer that are older than the first section mapped are deleted, whereby the sections mapped are now ready to be decoded.
